# EUROPEAN PATENT APPLICATION

(11) **EP 3 878 532 A1**
(43) Date of publication of application: **15.09.2021**
(21) Application number: 21158197.0
(22) Date of filing: 19.02.2021
(51) Int. Cl.: A63H 23/10

(54) **WATER TOY**

(30) Priority: 10.03.2020 JP 2020040421
(71) Applicant: Agatsuma Co., Ltd., Taito-ku Tokyo (JP)
(72) Inventor: TODOKORO, Shinji, Taito-ku, Tokyo (JP)
(74) Representative: Gill Jennings & Every LLP

(57) **Abstract**

A water toy includes a spherical portion, an air introducing portion having an air introducing cylindrical portion (a cylindrical portion) configured to establish a communication between an interior and an exterior of the spherical portion and a check valve configured to seal up a communicating hole in the air introducing cylindrical portion, and a water introducing portion having a water introducing cylindrical portion (a cylindrical portion) configured to establish a communication between the interior and the exterior of the spherical portion.

## Description

### Field of the Invention

The present invention relates to a water toy.

### Background to the Invention

There have been disclosed heretofore water toys, referred to as a beach ball, which can be inflated into a ball shape for play by introducing air thereinto. For example, Japanese Utility Model Laid-Open No. 3-24161 (JP-UM-A-3-24161) discloses a pneumatic ball toy in which a small ball is provided in a ball formed from synthetic resin. This ball toy, which is formed from synthetic resin, can move unexpectedly as the center of gravity of the synthetic resin ball changes as a result of the small ball moving in an interior of the synthetic resin ball. In addition, with this ball toy, a player can also enjoy playing therewith by changing further the center of gravity of the synthetic ball by introducing water from an air introducing port.

With the ball toy disclosed in JP-UM-A-3-24161, however, when attempting to cause the ball toy to move more unexpectedly by introducing not only air but also water into the interior of the ball toy, since water has to be introduced into the ball toy from an air introducing portion having a check valve, the introduction of water into the interior of the ball toy becomes difficult because the introduction of water is interrupted by the check valve. In addition, in the event that there is provided no check valve in the air introducing portion, the air in the interior of the ball toy escapes at the same time as the air introducing portion is opened, which makes it difficult for air to be introduced into the interior of the ball toy.

### SUMMARY OF THE INVENTION

The present invention has been made in view of the situations described above, and an object thereof is to provide a water toy which can facilitate the introduction of air and water into an interior thereof.

According to an aspect of the present invention, there is provided a water toy including a spherical portion, an air introducing portion having an air introducing cylindrical portion configured to establish a communication between an interior and an exterior of the spherical portion and a check valve configured to block up a communication hole in the air introducing cylindrical portion, and a water introducing portion having a water introducing cylindrical portion configured to establish a communication between the interior and the exterior of the spherical portion.

With the water toy according to the present invention, a water toy can be provided which can facilitate the introduction of air and water into an interior of the water toy.

### BRIEF DESCRIPTION OF THE DRAWINGS

Examples of water toys in accordance with embodiments of the invention will now be described with reference to the accompanying drawings, in which:
FIG. 1 is a front view of a water toy according to an embodiment of the present invention;
FIG. 2 is a sectional view of the water toy according to the embodiment of the present invention, which corresponds to a section taken along a line II-II in FIG. 1 with an air introducing portion and a water introducing portion opened and a figurative body omitted from illustration;
FIG. 3 is a plan view showing the water toy according to the embodiment of the present invention;
FIG. 4 is a bottom view showing the water toy according to the embodiment of the present invention; and
FIG. 5 is a front view showing a state in which the water toy according to the embodiment of the present invention is in use.

### DETAILED DESCRIPTION

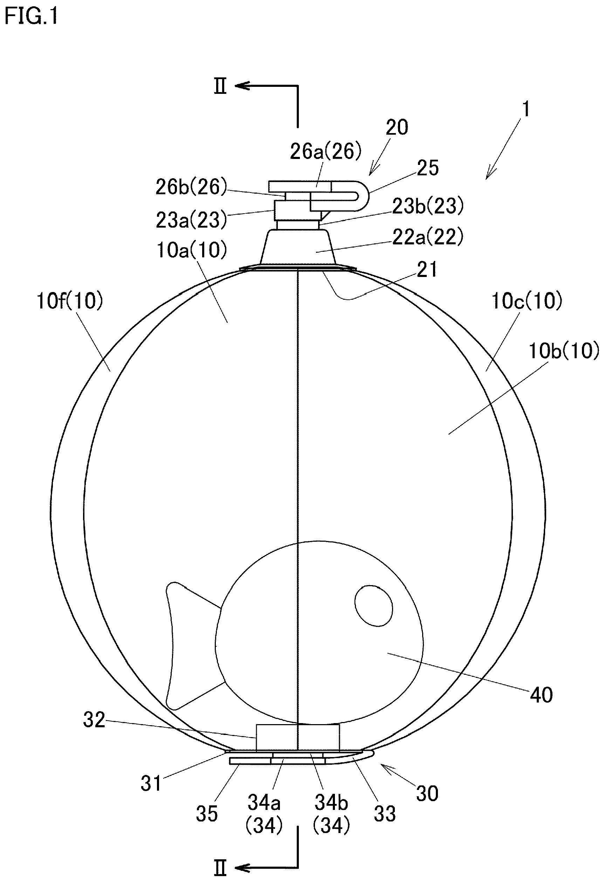

Hereinafter, an embodiment of the present invention will be described based on drawings. A water toy 1 according to the embodiment of the present invention includes a spherical portion 10, an air introducing portion 20 provided at a side of the spherical portion 10, and a water introducing portion 30 provided at a side of the spherical portion 10 which is situated opposite to the side where the air introducing portion 20 is provided. In the following description, the side of the water toy 1 where the air introducing portion 20 is provided (an upper side in FIG. 1) is referred to as an upper side, while the side of the water toy 1 where the water introducing portion 30 is provided (a lower side in FIG. 1) is referred to as a lower side.

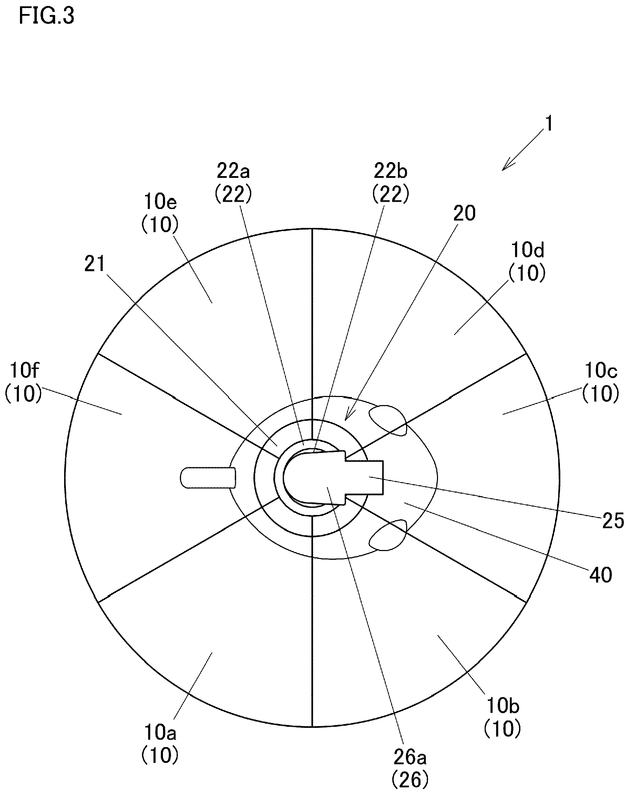

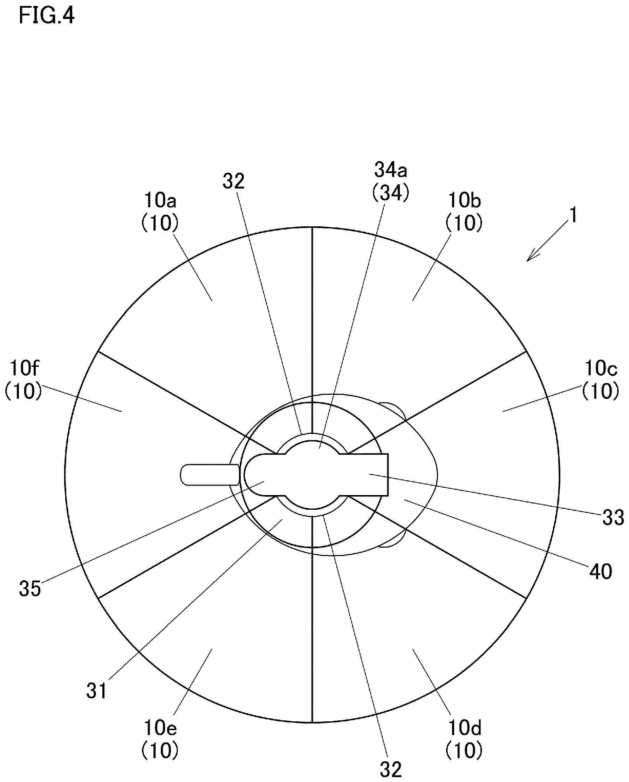

The spherical portion 10 is, as shown in FIG. 1, is formed by fusing together six thin members of a substantially oval shape (a first panel portion 10a, a second panel portion 10b, a third panel portion 10c, a fourth panel portion 10d, a fifth panel portion 10e, and a sixth panel portion 10f). The spherical portion 10 can be inflated into the form of a sphere by introducing air thereinto (refer to FIGS. 3 and 4). The first panel portion 10a to the sixth panel portion 10f are arranged in such a manner as to be situated adjacent to one another sequentially in a numerically ascending or descending order, whereby the first panel portion 10a is disposed adjacent to the sixth panel portion 10f.

The first panel portion 10a to the sixth panel portion 10f each have an arc-shaped short side at each end in a long side direction thereof. Then, the first panel portion 10a to the sixth panel portion 10f each moderately increase in width as they each extend from the ends towards a center thereof. Additionally, the first panel portion 10a to the sixth panel portion 10f each have the same shape. The first panel portion 10a to the sixth panel portion 10f are fused to one another along long sides thereof so as to make up the spherical portion 10.

The first panel portion 10a to the sixth panel portion 10f are each formed of a transparent sheet of poly vinyl chloride (PVC) . It is known that poly vinyl chloride constitutes a soft elastic member.

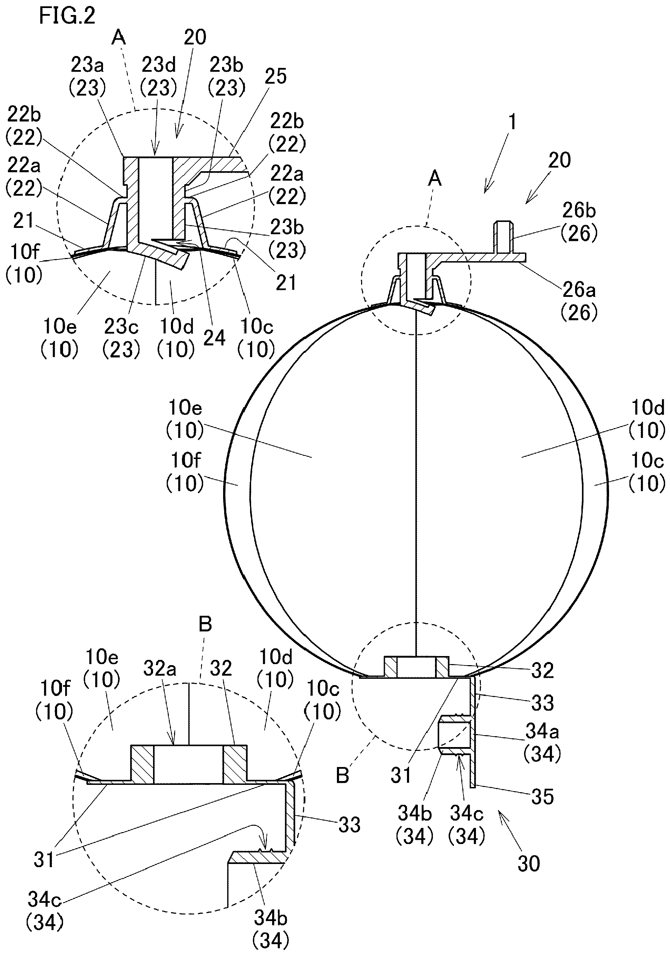

The water toy 1 includes the air introducing portion 20. The air introducing portion 20 is situated at an upper portion of the water toy 1 as shown in FIGS. 1 and 2 and is joined to the short sides of the first panel portion 10a to the sixth panel portion 10f as shown in FIG. 3. The air introducing portion 20 can be formed from poly vinyl chloride.

The air introducing portion 20 has a joining portion 21. The joining portion 21 is situated at a bottom portion of the air introducing portion 20 (a portion at a side thereof which faces the spherical portion 10) (refer to an enlarged view of a portion A in FIG. 2). Then, the joining portion 21 is joined to the spherical portion 10 (short-side portions of the first panel portion 10a to the sixth panel portion 10f) in such a manner as to overlap the spherical portion 10 and is formed into a ring shape along a full circumference thereof (refer to FIG. 3). The joining portion 21 joins the air introducing portion 20 to the spherical portion 10 in the way described above.

The air introducing portion 20 has a support portion 22. As shown in the enlarged view of the portion A in FIG. 2, the support portion 22 has a shape of a frustum of a circular cone having a hollow interior and has an inclined surface 22a, which is erected from the joining portion 21 while being slightly inclined from a vertical direction, and a flat surface 22b, which extends from an apex portion of the inclined surface 22a. The flat surface 22b constitutes a surface normal to an axis of the water toy 1 (or the air introducing portion 20). Then, the support portion 22 supports a cylindrical portion 23, which will be described later. This cylindrical portion 23 is disposed concentrically with the support portion 22.

The air introducing portion 20 has the cylindrical portion 23 (an air introducing cylindrical portion) . As shown in the enlarged view of the portion A in FIG. 2, the cylindrical portion 23 is provided in such a manner as to pass through a center of the flat surface 22b of the support portion 22. Thus, the cylindrical portion 23 is supported by the support portion 22 with a portion of the cylindrical portion 23 situated in an interior of the support portion 22. Then, the cylindrical portion 23 is formed substantially into a bottomed cylindrical shape and has a flange portion 23a, a communicating portion 23b and a check valve 23c. In the cylindrical portion 23, the flange portion 23a is formed along a circumference of an opening in the cylindrical portion 23, the check valve 23c is formed at a bottom portion of the cylindrical portion 23, and the communicating portion 23b is formed between the circumference of the opening and the bottom portion. A communicating hole 23d is formed in an interior of the cylindrical portion 23 so as to establish a communication between an interior and an exterior of the spherical portion 10.

The flange portion 23a is situated at an upper portion (an outermost upper portion as seen from the center of the water toy 1) of the cylindrical portion 23 (refer to FIG. 1). The flange portion 23a is formed along a full circumference of an outer side of the cylindrical portion 23 (refer to FIG. 1 and the enlarged view of the portion A in FIG. 2). The communicating portion 23b extends from the flange portion 23a towards a lower portion of the water toy 1 (in the direction of the center of the water toy 1). The communicating portion 23b passes through the flat surface 22b of the support portion 22 and extends into an inside of the inclined surface 22a (that is, the interior of the support portion 22). Then, the check valve 23c is formed at a distal end of the communicating portion 23b so as to normally seal up the communicating hole 23d. The check valve 23c can be formed by making a cut in a distal end side of the communicating portion 23b.

The air introducing portion 20 has a movable coupling portion 25. The movable coupling portion 25 is formed substantially into a flat plate shape and extends from an outer circumferential upper end side of the flange portion 23a of the cylindrical portion 23 (refer to the enlarged view of the portion A in FIG. 2). The movable coupling portion 25 is bent when the air introducing portion 20 is closed (refer to FIG. 1) .

The air introducing portion 20 has an air flow blocking plug portion 26. The air flow blocking plug portion 26 has an air flow blocking plug bottom portion 26a and an air flow blocking plug main body portion 26b. The air flow blocking plug bottom portion 26a is formed substantially into a horseshoe shape and extends from the movable coupling portion 25 (refer to the enlarged view of the portion A in FIG. 2 and FIG. 3). The air flow blocking plug main body portion 26b is formed substantially into a cylindrical shape and is erected from the air flow blocking plug bottom portion 26a. Additionally, the air flow blocking plug main body portion 26b is fittingly inserted into the communicating portion 23b of the cylindrical portion 23 when the air introducing portion 20 is closed (refer to FIG. 1).

The water toy 1 includes the water introducing portion 30. The water introducing portion 30 is, as shown in FIGS. 1 and 2, situated at the lower portion of the water toy 1 and is, as shown in FIG. 4, joined to the short sides of the first panel portion 10a to the sixth panel portion 10f. The water introducing portion 30 can be formed from poly vinyl chloride.

The water introducing portion 30 has a joining portion 31. The joining portion 31 is situated at a bottom portion of the water introducing portion 30 (a portion of a side of the water introducing portion 30 which faces the spherical portion 10) (refer to an enlarged view of a portion B in FIG. 2). Then, the joining portion 31 is joined to the spherical portion 10 in such a manner as to overlap the spherical portion 10 (short side portions of the first panel portion 10a to the sixth panel portion 10f) and is formed along a full circumference of the water introducing portion 30 into a ring shape (refer to FIG. 4). The joining portion 31 joins the water introducing portion 30 to the spherical portion 10 in the way described above.

The water introducing portion 30 has a cylindrical portion 32 (a water introducing cylindrical portion). The cylindrical portion 32 is provided in an inside of the joining portion 31 (refer to the enlarged view of the portion B in FIG. 2) and extends upwards in the water toy 1 (in the direction of the center of the water toy 1) (refer to FIG. 1). In other words, the cylindrical portion 32 is formed into a projecting shape which projects into the interior of the spherical portion 10. Additionally, the cylindrical portion 32 is formed into a cylindrical shape having two opening portions (refer to the enlarged view of the portion B in FIG. 2). The cylindrical portion 32 includes a communicating hole 32a formed in an interior thereof so as to establish a communication between the interior and the exterior of the spherical portion 10. An inside diameter of the cylindrical portion 32 is formed greater than an inside diameter of the cylindrical portion 23 of the air introducing portion 20.

The water introducing portion 30 has a movable coupling portion 33. The movable coupling portion 33 is formed into a flat plate shape and extends from an outer circumferential edge of the joining portion 31. The movable coupling portion 33 is bent when the water introducing portion 30 is closed (refer to FIG. 1).

The water introducing portion 30 has a water flow blocking plug portion 34. The water flow blocking plug portion 34 has a water flow blocking plug bottom portion 34a and a water flow blocking plug main body portion 34b. The water flow blocking plug bottom portion 34a is formed substantially into a circular disk shape (refer to FIG. 4) and extends from the movable coupling portion 33 (refer to the enlarged view of the portion B in FIG. 2). The water flow blocking plug main body portion 34b is formed substantially into a cylindrical shape and is erected from the water flow blocking plug bottom portion 34a (refer to the enlarged view of the portion B in FIG. 2) . Additionally, the water flow blocking plug main body portion 34b is fittingly inserted into the cylindrical portion 32 when the water introducing portion 30 is closed (refer to FIG. 1) . In this state, the water flow blocking plug main body portion 34b can be fixed more strongly or rigidly to the cylindrical portion 32 because an annular projection 34c is provided circumferentially on an outer side of the water flow blocking plug main body portion 34b (refer to FIG. 2).

The water introducing portion 30 has a handle portion 35. The handle portion 35 extends from the water flow blocking plug bottom portion 34a (refer to FIG. 1 and the enlarged view of the portion B in FIG. 2). In addition, the handle portion 35 is formed into a projecting shape which projects in a direction coinciding with a direction in which the movable coupling portion 33 extends from the joining portion 31.

The water toy 1 includes a figurative body 40. The figurative body 40 is disposed in the interior of the spherical portion 10 (refer to FIG. 1). The figurative body 40 is formed from poly vinyl chloride and has a hollow structure.

An example of how to play with the water toy 1 formed as described heretofore will be described. Firstly, a user or player fittingly inserts the air flow blocking plug portion 26 of the air introducing portion 20 into the cylindrical portion 23 of the air introducing portion 20 to thereby close the air introducing portion 20, while the water flow blocking plug portion 34 of the water introducing portion 30 is removed from the cylindrical portion 32 of the water introducing portion 30 to thereby open the water introducing portion 30. Then, the user turns the water toy 1 downside up so that the water introducing portion 30 is then directed upwards, whereby water is introduced from the cylindrical portion 32 into the interior of the spherical portion 10 (to such an extent that about one third thereof is filled).

Here, since the cylindrical portion 32 is formed into the projecting shape which projects into the interior of the spherical portion 10, and the joining portion 31 (the water introducing portion 30) and the spherical portion 10 are formed of the soft elastic members of poly vinyl chloride, the user depresses the joining portion 31 near the cylindrical portion 32 and the short side portion of the spherical portion 10 so as to deform the lower side of the spherical portion 10 into a mortar-like shape (a conically recessed shape) . By doing so, even though water is poured to a position deviating from the opening portion of the cylindrical portion 32, water so poured can be introduced into the interior of the spherical portion 10. Further, since the first panel portion 10a to the sixth panel portion 10f, which make up the spherical portion 10, are transparent as described before, an amount of water introduced into the interior of the spherical portion 10 can easily be visualized to the user. When the introduction of water into the interior of the spherical portion 10 is completed, the user fittingly inserts the water flow blocking plug portion 34 into the cylindrical portion 32 so as to close the water introducing portion 30.

Next, the user turns the water toy 1 upside down so that the air introducing portion 20 is directed upwards so as to prevent the water introduced into the interior of the spherical portion 10 from flowing out therefrom and removes the air flow blocking plug portion 26 of the air introducing portion 20 from the cylindrical portion 23 of the air introducing portion 20 to thereby open the air introducing portion 20. The user introduces air from the side of the cylindrical portion 23 where the flange portion 23a is formed. This causes the check valve 23c of the cylindrical portion 23 to tilt towards the center of the water toy 1 (the spherical portion 10), whereby a gap 24 is formed between the communicating portion 23b and the check valve 23c of the cylindrical portion 23. The air introduced from the side of the cylindrical portion 23 where the flange portion 23a is formed is then introduced into the interior of the spherical portion 10 of the water toy 1 through the gap 24. When the introduction of air into the interior of the spherical portion 10 is completed, the user fittingly inserts the air flow blocking plug portion 26 into the cylindrical portion 23 so as to close the air introducing portion 20.

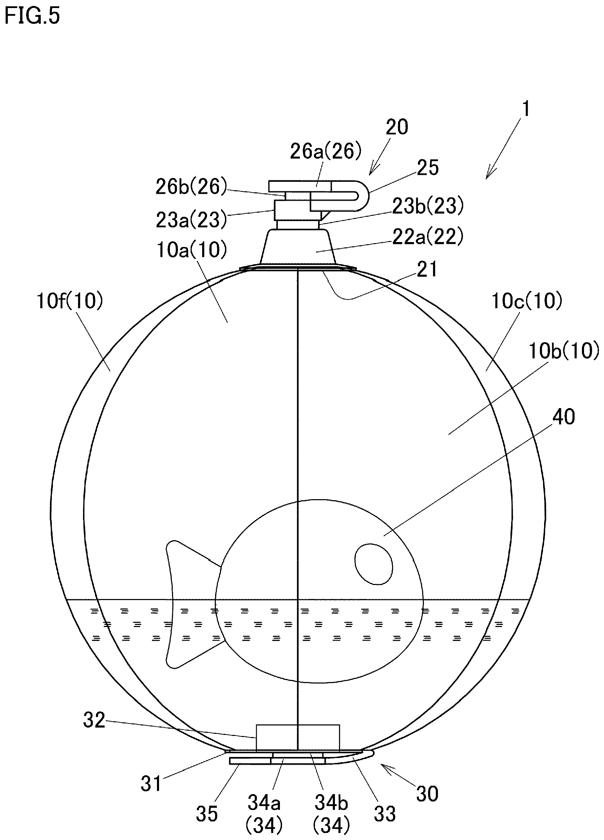

At this time, since the air and water, which are introduced in the ways described above, fill the interior of the water toy 1, the figurative body 40 rests floating in the water in the interior of the water toy 1 (refer to FIG. 5). Thus, the user can play with the water toy 1 while moving the figurative body 40 floating in the water in the interior of the water toy 1 by tilting or moving the water toy 1. In addition, since the water toy 1 is formed from poly vinyl chloride, the user can continue to play with the water toy 1 without puncturing even though the water toy 1 is dropped from a height corresponding to the height of a child (for example, 150 cm). Further, since the water toy 1 is formed from poly vinyl chloride, even when the water toy 1 hits a human body erroneously, it inflicts great pain thereon only with difficulty.

In addition, since air is kept staying in the interior of the water toy 1, the user can play with the water toy 1 by causing the water toy 1 to rest floating in water (for example, warm water in a bathtub or water in a vinyl bathing pool for children).

When finishing playing with the water toy 1, the user removes the water flow blocking plug portion 34 of the water introducing portion 30 from the cylindrical portion 32 of the water introducing portion 30 so as to open the water introducing portion 30 and turns the water toy 1 upside down so that the water introducing portion 30 is directed downwards. This allows the air and water kept staying in the interior of the water toy 1 to easily escape through the cylindrical portion 32. Alternatively, the user can pinch the cylindrical portion 23 of the air introducing portion 20 with fingers to form the gap 24 between the communicating portion 23b and the check valve 23c so as to allow the air and water to escape from the gap 24. In addition, since the volume of the water toy 1 is reduced after the air and water are caused to so escape therefrom, the user can fold the water toy 1 into a small shape for stowage after the user finishes playing with the water toy 1.

Thus, while the embodiment of the present invention has been described heretofore, the present invention is not limited by the embodiment in any way, and hence, various modifications can be made thereto. For example, the material of the water toy 1 is not limited to poly vinyl chloride, and hence, the water toy 1 may be formed from another resin material such as an EVA resin (Ethylene Vinyl Acetate Copolymer) or the like.

In addition, illustrations, patterns, characters, and the like may be printed on the first panel portion 10a to the sixth panel portion 10f which make up the spherical portion 10. In this case, the first panel portion 10a to the sixth panel portion 10f can be printed with different marks.

Further, the water toy 1 may be configured so that a fastener is provided at one of the portions where the first panel portion 10a to the sixth panel portion 10f are fused to one another, so that the figurative body 40 disposed in the interior of the spherical portion 10 is removed therefrom or is replaced with a different toy through an opening which is closed and opened by the fastener.

Furthermore, the shapes of the cylindrical portion 23 of the air introducing portion 20 and the cylindrical portion 32 of the water introducing portion 30 are not limited to the circular cylindrical shapes, and hence, the cylindrical portion 23 and the cylindrical portion 32 may be formed into a prismatic or angular cylindrical shape or the like. Thus, the cylindrical portion 23 and the cylindrical portion 32 only need to be formed into the shape of a cylinder.

Additionally, the figurative body 40 disposed in the interior of the spherical portion 10 is not limited to the body having the hollow structure and configured to rest floating in water, and hence, the figurative body 40 can also take the form of marbles or sand, for example. Consequently, a toy body can be disposed in the interior of the spherical portion 10.

## Claims

1. A water toy (1) comprising:
a spherical portion (10);
an air introducing portion (20) having an air introducing cylindrical portion (23) configured to establish a communication between an interior and an exterior of the spherical portion (10) and a check valve (23c) configured to seal up a communicating hole (23d) in the air introducing cylindrical portion (23); and
a water introducing portion (30) having a water introducing cylindrical portion (32) configured to establish a communication between the interior and the exterior of the spherical portion (10).

2. The water toy (1) according to claim 1,
wherein a toy body (40) is accommodated in the interior of the spherical portion (10).

3. The water toy (1) according to claim 1 or 2,
wherein the spherical portion (10) is formed of a transparent member.

4. The water toy according to any one of claims 1 to 3,
wherein the spherical portion (10) is formed of a sheet-shaped member.

5. The water toy (1) according to any one of claims 1 to 4,
wherein the spherical portion (10) is formed of a soft elastic member.

6. The water toy (1) according to any one of claims 1 to 5,
wherein the water introducing portion (30) is formed into a projecting shape which projects towards the interior of the spherical portion.
